# EUROPEAN PATENT SPECIFICATION

(11) **EP 0 397 588 B1**
(45) Date of publication and mention of the grant of the patent: **31.08.1994**
(21) Application number: 90500038.6
(22) Date of filing: 10.04.1990
(51) Int. Cl.: B60R 25/08

(54) **Anti-robbery lock for a vehicle handbrake**
Antidiebstahlschloss für eine Autohandbremse
Serrure antivol pour frein à main de voiture

(30) Priority: 13.04.1989 ES 8901304
(43) Date of publication of application: 14.11.1990
(73) Proprietor: Homayoun, Behrooz Shahir, Coquitlam, B.C. V3K - 2G7 (CA)
(72) Inventor: Homayoun, Behrooz Shahir, Coquitlam, B.C. V3K - 2G7 (CA)
(74) Representative: Lopez Cortes, José

(56) References cited:
- DE-A- 3 109 983
- DE-A- 3 622 347
- FR-A- 455 755
- US-A- 1 157 523
- US-A- 1 310 577

## Description

The present invention refers to a new protection of automobile against robbery, consisting of blocking the lever of the handbrake by a lock.

When the car is parked and the handbrake is pulled up, the movement of the car is impossible. There are a few locking devices for handbrakes, like DE-A-3 622 347 and US-A-1 157 523, on which the preamble of claim 1 is based. This invention is a lock with two bolt mechanisms which will mount on the handbrake lever. It is practical and secure.

When the handbrake is pulled up the movement of the car is impossible, and locking the handbrake with a lock, robbing the car is surely impossible.

When a car has its handbrake blocked with a lock, the car can not move. Soldering the lock to the handbrake lever, it is impossible to break it. Neither is it easy to open a good lock, especially when it has a different key from the car. Now, cars have safety locks, which is situated on the steering-wheel and have the same key as the car key. And almost in all cars, it is very easy breaking the lock, with a quick and strong movement of the steering-wheel. And in many cars they use chains and pad locks, or other extra anti-rob mechanisms for more safety.

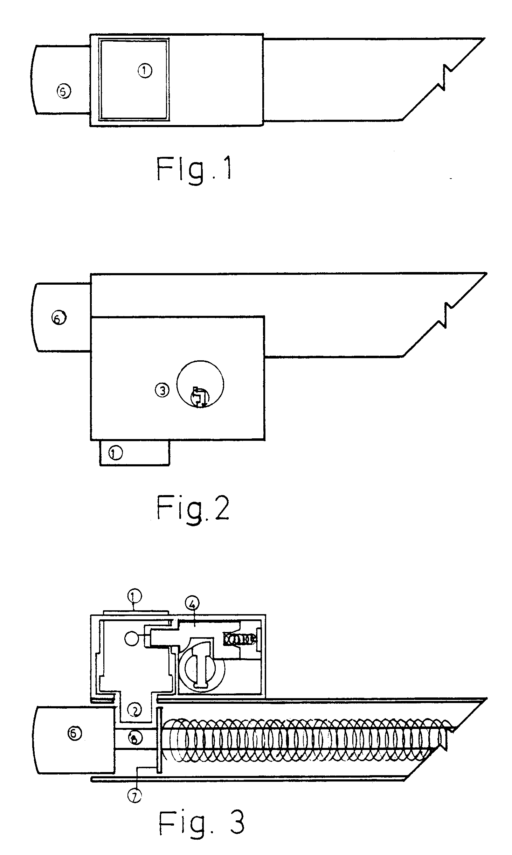

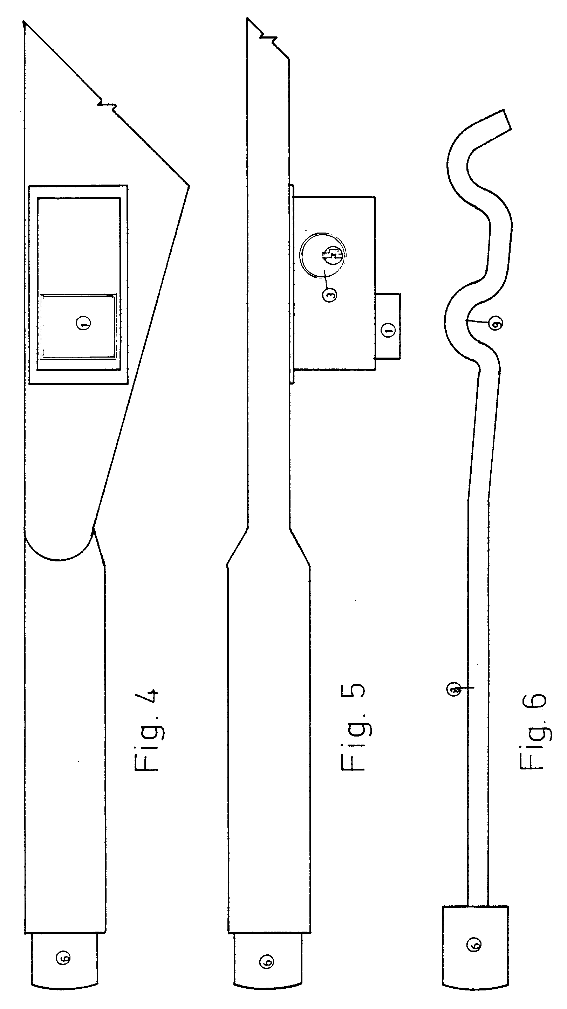

Figures 1 and 2 represent side and top views of the lock joined to the front part of the lever. And figure 3 represents a section that shows the mechanism. Figures 4 and 5 are side and top views of the lock joined to the middle part of the lever. Figure 6 represents the inside bar of the lever.

This lock has two parts. The first part is a button (1), on one side of the lock, immediately after which there is a bolt (2), which is held in an open position with the help of a spring. The second part is the key hole of the lock (3), on the top part of the lock, that with a small interior bolt (4) will control the position of the button and the main bolt (2). When the button is pressed, the hollow (5) prepared in it, for the entrance of the interior bolt, will situate at the same level that the bolt enters in the hollow, impeding the button from moving out, and the lock locks, it can not be opened, unless with its own key, with a quarter of a turn.

The lock can be placed on two different parts and in two different ways. The first, the lock can be placed on the front part of the lever (figures 1, 2 and 3), and it functions exactly under the button (6) of the lever. When the lock locks, the bolt of the lock (2), enters through a hole in the lever and it impedes the button (6), from moving, thus the handbrake can not be released. Almost one centimeter below the button of the lever (6), a washer (7), is soldered around the bar (8), that opens a space between the button and the spring, for the bolt to enter.

In the second case the lock is situated in the middle part of the lever (figures 4 and 5), where the bar (8), of the handbrake inside the lever, is arched un the form of a semicircle (9), from where, through a hole made in the lever, the bolt enters. When the lock is locked the bolt that is situated on the semicircle of the rod, does not let the rod move, in order to release the handbrake.

A switch with two contacts, or two switches, for a control light on the control panel, permits you to know about the situation of the handbrake. When the handbrake is not well pulled, the light on the control panel blinks in order to warn you that the handbrake is not well pulled. And when it is well pulled, the light is lit.

## Claims

1. An anti-robbery lock of a handbrake of an automobile, comprising :
a bolt (2), engagable in a opening provided on the handbrake lever to impede the rod (8) inside the lever from being moved by the button (6) to release the hand brake, characterized by the fact that it further comprises : a button (1) forming one part with the bolt (2) which is held in an open position by a spring, said button (1) being provided with a hollow (5) on a side, a second bolt (4) being spring loaded towards the button (1), said second bolt (4) engaging the hollow (5) when the button (1) is pressed , to prevent it from returning to the open position,
a key hole (3) for entering a key to return the second bolt (4) against the force of its spring to its open position , allowing said first bolt (2) to return to its open position , thereby unblocking the movement of the rod (8).

2. The anti-robbery lock for a vehicle handbrake as claimed in claim 1, to be placed on the front part of the lever of the handbrake, so that its bolt (2), through a hole, enters exactly below the button (6) of the lever and it prevents one from releasing the handbrake.

3. The anti-robbery lock for a vehicle handbrake as claimed in claim 1, to be placed on the middle part of the lever . At this point the rod (8), inside the lever, will be arched in a semicircular shape (9), where the bolt of the lock can enter through a hole, stopping the movement of the rod, in order to release the handbrake.

## Patentansprüche

1. Diebstahlsohutzblockierung der Handbremse eines Kraftfahrzeugs, bestehend aus:
einem Bolzen (2), der in eine an der Handbremse vorgesehene Öffnung eingeschoben wird um zu verhindern, dass der die Handbremse freigebende Knopf (6) die innerhalb des Hebels befindliche Stange (8) bewegt, dadurch gekennzeichnet, dass ausserdem als Bestandteil des Bolzenz (2) ein Knopf (1) vorgesehen ist, der von einer Feder in geöffnetem Zustand gehalten wird, wobei dieser Knopf (1) an einer Seite eine Aushöhlung (5) aufweist; einem zweiten Bolzen (4), der von einer Feder in Richtung des Knopfes (1) gedruckt wird und bei Betätigung des Knopfes (1) in die Aushöhlung (5) eindringt, um eine Rückkehr in den geöffneten Zustand zu vermeiden; einem Schlüsselloch (3), in das ein Schlüssel gesteckt wird, um den zweiten Bolzen (4) gegen die Wirkung seiner Feder zu öffnem, womit auch der erste Bolzen (2) wieder in die geöffnete Stellung zurückke;hrt und so die Bewegung der Stange (8) freigegeben wird.

2. Diebstahlschutzblockierung der Handbremse eines Kraftfahrzeugs, nach Anspruch 1 dadurch gekennzeichnet, dass sie an der Frontseite des Bremshebels so angeordnet wird, dass ihr Bolzen (2) über eine Öffnung genau unter dem Knopf (6) des Hebels in diesen eindringt und ein Lösen der Handbremse verhindert.

3. Diebstahlschutzblockierung der Handbremse eines Kraftfahrzeugs, nach Anspruch 1 dadurch gekennzeichnet, dass sie im mittleren Bereich des Hebels angeordnet wird. An dieser Stelle biegt sich die im Innern des Hebels vorgesehene Stange in Form eines Halbkreises (9), in den der Bolzen des Schlosses über eine Offnung eindringen und somit eine Bewegung der Stange zur Lösung der Handbremse verhindern kann.

## Revendications

1. Blocage antivol du frein à main d'une automobile , lequel comporte :
un goujon (2) qui peut trouver place dans une ouverture pratiquée sur ce frein à main, en vue d'empêcher que le bouton (6) servant à libérer le frein à main ne puisse mouvoir la tringle (8) qui se trouve á l'intérieur du levier,
lequel blocage est caractérisé par le fait qu'il comporte en outre : un bouton (1) qui fait partie intègrante du goujon (2) et qui est maintenu en positión ouverte par un ressort,
le bouton en question (1) etant poutvu d'un creux (5) sur un côté ; un deuxieme goujon (4) , chargé d'un ressort en direction du bouton (1) , ce deuxième goujon (4) s'introduisant dans le creux (5) , lorsque l'on pousse sur le bouton (1), pour l'em pêcher de reprendre la position ouverte; un orifce de clé (3), dans lequel il y a moyen d'introduire une clé qui fasse revenir le deuxieme goujon (4) à-sa position ouverte , contre la force de son ressort , tout en permettant que le premier goujon cité plus haut (2) reprenne sa position ouverte et tout en débloquant de la sorte le mouvement de la tringle (8).

2. Blocage antivol du frein à main d'une automobile, conforme à la revendication 1, qui se placera sur la partie avant du levier du frein , de telle maniere que son goujon (2) entre, au travers d'un orifice , exactement en -dessous du bouton (6) du levier , empêchant ainsi que le frein à main puisse être libéré.

3. Blocage antivol du frein á main d'une automobile , conforme à la revendication 1, qui se placera au milieu du levier. En ce point, la tringle (8), qui se trouve à l'interieur du levier, se courbera en prenant une forme semi-circulaire (9), dans la - quelle le goujon du blocage puisse entrer au travers d'un orifice, empêchant de la sorte le mouvement de la tringle pour libérer de frein à main .
